# EUROPÄISCHE PATENTSCHRIFT

(11) **EP 4 010 677 B1**
(45) Veröffentlichungstag und Bekanntmachung des Hinweises auf die Patenterteilung: **12.03.2025**
(21) Anmeldenummer: 20757515.0
(22) Anmeldetag: 03.08.2020
(51) Int. Cl.: G01M 15/02, G01L 3/22, G01M 13/026, G01M 15/04

(54) **PRÜFSTAND UND VERFAHREN ZUR DURCHFÜHRUNG EINES PRÜFLAUFS AUF EINEM PRÜFSTAND**
TEST BENCH AND METHOD FOR CARRYING OUT A TEST RUN ON A TEST BENCH
BANC D'ESSAI ET PROCÉDÉ PERMETTANT D'EFFECTUER UN ESSAI SUR UN BANC D'ESSAI

(30) Priorität: 05.08.2019 AT 506982019
(43) Veröffentlichungstag der Anmeldung: 15.06.2022
(73) Patentinhaber: AVL List GmbH, 8020 Graz (AT)
(72) Erfinder: BIER, Maximilian, 64285 Darmstadt (DE); QUICK, Andreas, 68305 Mannheim (DE)
(74) Vertreter: Patentanwälte Pinter & Weiss OG
(86) Internationale Anmeldenummer: PCT/AT2020/060287
(87) Internationale Veröffentlichungsnummer: WO 2021/022310

(56) Entgegenhaltungen:
- WO-A1-2014/195238
- WO-A1-2018/096085
- DE-A1- 102014 204 154

## Beschreibung

Die gegenständliche Erfindung betrifft ein Verfahren zur Durchführung eines Prüflaufs auf einem Prüfstand, wobei am Prüfstand ein Prüfling mit einer Belastungsmaschine verbunden wird, wobei von einer Prüfstandautomatisierungseinheit einem Drehmomentregler entsprechend des Prüflaufs ein Soll-Drehmoment vorgegeben wird, womit durch den Drehmomentregler ein Ist-Drehmoment der Belastungsmaschine eingestellt wird, und wobei dem Prüfling von einem Prüflingsregler eine Prüflingsstellgröße vorgegeben wird. Weiters betrifft die gegenständliche Erfindung einen Prüfstand zur Durchführung eines Prüflaufs, wobei am Prüfstand zur Durchführung des Prüflaufs ein Prüfling mit einer Belastungsmaschine verbunden ist, wobei eine Prüfstandautomatisierungseinheit ein Prüflingsregler und ein Drehmomentregler vorgesehen sind, wobei der Prüflingsregler dem Prüfling eine Prüflingsstellgröße vorgibt und die Prüfstandautomatisierungseinheit dem Drehmomentregler entsprechend des Prüflaufs eine Soll-Drehmoment vorgibt, womit der Drehmomentregler ein Ist-Drehmoment der Belastungsmaschine einstellt.

Bei der Entwicklung von Verbrennungsmotoren, Antriebsträngen mit Verbrennungsmotoren und Fahrzeugen mit Verbrennungsmotoren, spielt die Überprüfung des Emissions- und Verbrauchsverhaltens eine zentrale Rolle. In allen Phasen der Entwicklung erfolgt die Überprüfung des Emissions- und Verbrauchsverhaltens des Verbrennungsmotors auf Prüfständen, wie einem Motorprüfstand, Antriebsstrangprüfstand oder Rollenprüfstand. Die gesetzlichen Rahmenbedingungen für diese Überprüfung verändern sich aber zurzeit sehr stark. Während früher vornehmlich genormte Fahrzyklen, wie beispielsweise der New European Driving Cycle (NEDC), für diese Überprüfung verwendet wurde, wird nun zusätzlich die Überprüfung unter realen Fahrbedingungen gefordert. Für das Emissionsverhalten kommen hierfür sogenannte Real Driving Emission (RDE) Prüfläufe zur Anwendung, bei denen kein bestimmte Fahrzyklus vorgegeben wird, sondern eine mehr oder weniger zufällige Fahrstrecke zurückgelegt wird, die lediglich gewissen festgelegten Rahmenbedingungen entsprechen muss.

Es ist daher zum einen erforderlich aus realen Testfahrten mit einem Fahrzeug auf einer realen Straße Messwerte der Testfahrt, wie beispielsweise GPS-Daten, Motordrehzahl, Fahrpedalstellung, Fahrzeuggeschwindigkeit, usw., zu erfassen. Zum anderen muss dann aus den erfassten Messwerten ein für die Testfahrt repräsentativer Prüflauf für einen Prüfstand erstellt werden, der dann am Prüfstand gesamt oder teilweise durchlaufen werden kann, um beispielsweise das Emissions- oder Verbrauchsverhalten des Verbrennungsmotors zu erfassen und auszuwerten.

Am Prüfstand wird ein Prüfling, beispielsweise ein Verbrennungsmotor gemäß den Vorgaben des Prüflaufs betrieben, entweder allein (Motorprüfstand), oder in Kombination mit anderen Komponenten (Antriebsstrangprüfstand, Rollenprüfstand). Zur Durchführung des Prüflaufs wird der Verbrennungsmotor am Prüfstand, direkt oder indirekt, mit einer oder mehreren Belastungsmaschinen (Dynamometer) verbunden.

Für die Belastungsmaschine kann beispielsweise das Drehmoment oder die Drehzahl als Steuergröße bzw. Regelgröße dienen. Es kann über einen Drehmomentregler, bzw. einen Drehzahlregler ein Ist-Drehmoment, bzw. eine Ist-Drehzahl entsprechend eines Soll-Drehmoments bzw. einer Soll-Drehzahl eingestellt werden. Dabei erzeugt die Belastungsmaschine, beispielsweise über eine verbindende Prüfstandwelle, ein Belastungsmoment für den Prüfling. Das Soll-Drehmoment bzw. die Soll-Drehzahl wird dem Drehmomentregler, bzw. dem Drehzahlregler durch eine Prüfstandautomatisierungseinheit gemäß den Vorgaben des Prüflaufs vorgegeben.

Die Einstellung des Ist-Drehmoments bzw. der ist-Drehzahl durch den Drehmomentregler, bzw. Drehzahlregler kann in Form einer "Steuerung" im automatisierungstechnischen Sinn erfolgen, was bedeutet, dass keine Rückführung des Ist-Drehmoments bzw. der Ist-Drehzahl erfolgt. Alternativ kann das Ist-Drehmoment bzw. die Ist-Drehzahl zum Drehmomentregler, bzw. Drehzahlregler rückgeführt werden, was im automatisierungstechnischen Sinn einer "Regelung" entspricht.

Für den Prüfling ist ein Prüflingsregler vorgesehen, welcher grundlegend ebenso die Ist-Prüflingsdrehzahl oder das Ist-Prüflingsdrehmoment als Regelgröße bzw. Steuergröße "regeln", bzw. "steuern" kann. Hierzu kann dem Prüfling eine Stellgröße vorgegeben werden, wobei als Stellgröße eine Drehzahl oder ein Drehmoment, aber auch eine Stellgröße, die sich auf die Drehzahl oder das Drehmoment auswirkt, wie eine Fahrpedalstellung, eine Einspritzmenge, ein effektiver Zylindermitteldruck, ein ECU Motormoment, eine Einspritzmenge, ein Einspritzzeitpunkt, ein Zündzeitpunkt, etc. vorstellbar ist. Die Stellgröße kann einem, beispielsweise passiv ausgeführten, Prüfling auch vorgegeben werden ohne eine konkrete Prüflingsistgröße einzustellen.

Somit wird dem Drehmomentregler von der Prüfstandautomatisierungseinheit nach den Vorgaben des Prüflaufs ein (zeitdiskreter oder zeitkontinuierlicher) zeitlicher Verlauf des Soll-Drehmoments, welcher beispielsweise wiederum aus einer realen Testfahrt generiert wurde, vorgegeben. Ebenso wird dem Prüfling vom Prüflingsregler eine Prüflingsstellgröße vorgegeben, womit sich als Prüflingsistgröße ein Ist-Prüflingsdrehmoment oder eine Ist-Prüflingsdrehzahl einstellen kann. Dabei bilden die Belastungsmaschine und der Prüfling eine offene mechanische Schleife. Das bedeutet, dass eine Prüflingsistgröße (z.B. ein Ist-Prüflingsdrehmoment) nicht lediglich mechanisch von einer Prüflingsschnittstelle an eine andere Prüflingsschnittstelle geleitet wird, sondern dass die Prüflingsistgröße vollständig von einer oder mehreren Belastungsmaschinen abgestützt wird. Der Prüfling wird also zur Durchführung des Prüflaufs über eine Prüflingsschnittstelle direkt von einer oder mehreren Belastungsmaschinen belastet. Durch diese direkte Belastung kann eine steife Anbindung zwischen dem Prüfling und er Belastungsmaschine und damit eine dynamische und exakte Belastung des Prüflings sichergestellt werden. Weiters ergibt sich durch die direkte Belastung eine einfache Bedienung des Prüfstands, wobei der Prüflauf gut nachvollziehbar ist.

Es wird entweder einem Drehmomentregler der Belastungsmaschine ein Soll-Drehmoment oder einem Drehzahlregler der Belastungsmaschine eine Soll-Drehzahl vorgegeben. Es kann bei Vorhandensein sowohl eines Drehzahlregler als auch eines Drehmomentreglers zwischen einer Vorgabe eines Soll-Drehmoments und einer Soll-Drehzahl umgeschaltet werden, Drehzahlregler und Drehmomentregler können jedoch nicht gleichzeitig aktiv sein. Erfolgt jedoch eine derartige Umschaltung zwischen Drehzahlregler und Drehmomentregler, so können in der Anordnung Unstetigkeiten entstehen, was zu vermeiden ist. Als Unstetigkeit kann sich beispielsweise das Stellmoment der Belastungsmaschine sprunghaft ändern, womit sich auch die Ist-Drehzahl und das Ist-Drehmoment sprunghaft und auf nichtbeabsichtigte Art und Weise ändern.

Die WO/2018096085 A1 betrifft einen Prüfstand mit einem Prüfling und einer Belastungsmaschine, wobei zwei Drehmomentkomponenten zu einem Belastungsmaschinen-Drehmoment addiert werden. Dabei werden Drehzahlgrenzen jedoch nicht in die Betrachtung miteinbezogen.

Die DE 28 28 920 beschreibt einen Prüfstand, bei dem ein Drehmomentregler vorgesehen ist, welcher abhängig von der Drehzahl deaktivierbar ist. Damit wird sichergestellt, dass eine Abschaltung der Regelung erfolgt, wenn die Drehzahl zu hohe Werte erreicht.

Es ist eine Aufgabe der gegenständlichen Erfindung, einen Prüfstand für einen Prüfling, welcher von einer oder mehreren Belastungsmaschinen direkt belastet wird, anzugeben, welcher die oben beschriebenen Nachteile vermeidet und ein möglichst robustes Regelungsverfahren gewährleistet.

Diese Aufgabe wird erfindungsgemäß gelöst, indem die Ist-Drehzahl der Belastungsmaschine ermittelt und zumindest eine Abweichung zumindest eines Attributs der Ist-Drehzahl von zumindest einem Grenzwert ermittelt wird, wobei basierend auf der zumindest einen Abweichung zumindest ein additiver Drehmoment-Korrekturwert ermittelt und dem Soll-drehmoment überlagert wird.

Weiters wird die Aufgabe gelöst, indem am Prüfstand eine Drehzahlermittlungseinheit zur Ermittlung einer Drehzahl der Belastungsmaschine vorgesehen ist, wobei zumindest eine Vergleichseinheit vorgesehen ist, welche ausgestaltet ist zumindest eine Abweichung zumindest eines Attributs der Ist-Drehzahl von zumindest einem Grenzwert zu bestimmen, wobei zumindest eine Korrektureinheit vorgesehen ist, welche ausgestaltet ist basierend auf der zumindest einen Abweichung einen additiven Drehmoment-Korrekturwert zu ermitteln und dem Soll-drehmoment zu überlagern.

Als Prüfling kann beispielsweise ein Antrieb (Drehmomenterzeuger), eine Antriebsstrangkomponente, ein Antriebsstrang, ein Fahrzeug, etc. dienen. Eintriebe und/oder Abtriebe des Prüflings können an eine oder mehrere Belastungsmaschinen angeschlossen sein, wobei die Anbindung auch über Anpassgetriebe erfolgen kann.

Als Prüfstände sind somit beispielsweise Motorprüfstände, (Differential-)Getriebeprüfstände, Powerpacks (Motor und Getriebe), Gesamtantriebsstränge (bis zur Halbwelle), Rollenprüfstände, Antriebsstrangelemente (Kupplung, Wandler, Mittendifferential, Differential, ...), vorstellbar.

Es wird erfindungsgemäß für die Belastungsmaschine angenommen, dass ein Drehmomentregler vorgesehen ist. Der Drehmomentregler kann je nach Ausführung eine "Regelung" des Ist-Drehmoments im automatisierungstechnischen Sinn oder eine "Steuerung" des Ist-Drehmoments im automatisierungstechnischen Sinn durchführen.

In der gegenständlichen Anmeldung kann durch den Drehmomentregler und den Prüflingsregler grundlegend jeweils eine Steuerung und/oder eine Regelung im automatisierungstechnischen Sinn durchgeführt werden. Das bedeutet, dass der Drehmomentregler und der Prüflingsregler nicht zwingend reine "Regler" im automatisierungstechnischen Sinn darstellen müssen, sondern auch "Steuerungen" im automatisierungstechnischen Sinn können.

Somit wird dem Drehmomentregler von der Prüfstandautomatisierungseinheit ein Soll-Drehmoment entsprechend des Prüflaufs vorgegeben um das Ist-Drehmoment einzustellen, d.h. zu regeln oder zu steuern. Dies kann direkt unter Vorgabe eines Stelldrehmoments erfolgen, oder durch Vorgabe einer zum Drehmoment äquivalenten Stellgröße oder einer Stellgröße, aus welcher das Drehmoment abgeleitet werden kann. Als mögliche weitere Stellgrößen seien beispielsweise Ströme, Spannungen, Ventilstellungen, etc. genannt.

Für den Prüfling ist ein Prüflingsregler vorgesehen, welcher dem Prüfling eine Prüflingsstellgröße vorgibt. sein. Der Prüflingsregler kann unter Vorgabe der Prüflingssollgröße eine "Regelung" der Prüflingsistgröße (Prüflingsdrehmoment, Prüflingsdrehzahl) oder eine "Steuerung" der Prüflingsistgröße durchführen. Dabei kann ein Prüflingssollwert vorgesehen sein; ist der Prüfling passiv (z.B. rein mechanisch) ausgestaltet, so kann es auch ausreichend sein, wenn dem Prüfling lediglich eine Prüflingsstellgröße und kein Prüflingssollwert vorgegeben wird. Es kann beispielsweise eine Fahrpedalstellung als Prüflingsstellgröße dienen, womit von einer T/α-Regelung, bzw. T/α-Steuerung (T für das Drehmoment der Belastungsmaschine und α für die Fahrpedalstellung) gesprochen wird. Wird dem Prüfling anstatt der Fahrpedalstellung eine Drehzahl als Prüflingsstellgröße vorgegeben, so spricht man von einer T/N-Regelung, bzw. T/N-Steuerung, wobei T für das Drehmoment der Belastungsmaschine und N für die Prüflingsdrehzahl des Prüflings steht.

Diese Aufzählung ist nur beispielhaft zu sehen, es können durch den Prüflingsregler beliebige Stellgrößen vorgegeben werden, was als T/*-Regelung, bzw. T/*-Steuerung bezeichnet wird, wobei der Stern als Platzhalter für eine beliebige Stellgröße des Prüflings verwendet wird.

Während des Betriebs einer T/*-Regelung, bzw. T/*-Steuerung kann üblicherweise nur das Ist-Drehmoment der Belastungsmaschine eingestellt werden, womit eine geringe Flexibilität gegeben ist und auf veränderte, insbesondere erhöhte Ist-Drehzahlen nicht reagiert werden kann. Bei erhöhten Ist-Drehzahlen besteht die Gefahr, dass Komponenten des Prüfstands, insbesondere der Prüfling, beschädigt werden können. Daher wird erfindungsgemäß die Ist-Drehzahl mittels einer Drehmomentermittlungseinheit ermittelt. Weiter wird zumindest ein Attribut der Ist-Drehzahl mit einem Grenzwert verglichen und eine Abweichung des Attributs vom Grenzwert ermittelt. Basierend auf der aktuellen Abweichung wird ein Drehmoment-Korrekturwert ermittelt und dem Soll-Drehmoment überlagert. Damit kann die Ist-Drehzahl des Prüflings über das Soll-Drehmoment beeinflusst werden.

Vorteilhafterweise wird als ein erstes Attribut der Ist-Drehzahl der Wert der Ist-Drehzahl herangezogen, und ist als Grenzwert eine obere und/oder untere Drehzahlgrenze vorgesehen. Es kann eine erste Korrektureinheit einen Drehzahl-Korrekturregler, vorzugsweise einen PI-Regler, und eine erste Überlagerungseinheit umfassen, wobei der Drehzahl-Korrekturregler von einer ersten Vergleichseinheit eine Drehzahlabweichung der Ist-Drehzahl von einer Drehzahlgrenze erhält und auf Basis der Drehzahlabweichung einen Drehmoment-Korrekturwert ermittelt und über die erste Überlagerungseinheit dem Stelldrehmoment überlagert.

Damit kann der Wert der Ist-Drehzahl als Attribut überwacht werden. Somit kann sichergestellt werden, dass eine obere/untere Drehzahlgrenze nicht über/unterschritten wird, indem dem Soll-Drehmoment das additive Drehmoment-Korrekturwert überlagert wird.

Der Drehzahl-Korrekturregler kann aktivierbar, vorzugsweise bei Überschreitung einer ersten Drehzahlgrenze, und/oder deaktivierbar, vorzugsweise bei Unterschreitung einer zweiten Drehzahlgrenze, sein. Diese Aktivierung und/oder Deaktivierung kann durch einen Anwender und/oder die Prüfstandautomatisierungseinheit erfolgen

Vorzugsweise wird als ein zweites Attribut der Ist-Drehzahl ein Ist-Drehzahlgradient der Ist-Drehzahl herangezogen, wobei als Grenzwert eine obere und/oder untere Drehzahlgradientengrenze vorgesehen ist. Es kann eine zweite Korrektureinheit einen Drehzahlgradienten-Korrekturregler, vorzugsweise einen Pl-Regler, und eine zweite Überlagerungseinheit umfassen, wobei der Drehzahlgradienten-Korrekturregler von einer zweiten Vergleichseinheit eine erste Abweichung des Ist-Drehzahlgradienten von einer Drehzahlgradientengrenze erhält, aus der ersten Abweichung einen Drehmoment-Korrekturwert ermittelt und über die erste Überlagerungseinheit den Drehmoment-Korrekturwert dem Stelldrehmoment überlagert.

Wird ein Ist-Drehzahlgradient als Attribut betrachtet, so kann auf eine rasche Änderung der Drehzahl reagiert werden, indem das Soll-Drehmoment angepasst wird. Damit kann sichergestellt werden, dass die Änderungsgeschwindigkeit der Drehzahl einen Grenzwert nicht überschreitet. Die Ermittlung des Ist-Drehzahlgradienten kann beispielsweise erfolgen, indem zwei aufeinanderfolgende Absolutwerte der Drehzahl miteinander verglichen werden.

Der Drehzahlgradienten-Korrekturregler kann aktivierbar, vorzugsweise bei Überschreitung einer ersten Drehzahlgradientengrenze, und/oder deaktivierbar, vorzugsweise bei Unterschreitung einer zweiten Drehzahlgradientengrenze, sein. Diese Aktivierung und/oder Deaktivierung kann durch einen Anwender und/oder die Prüfstandautomatisierungseinheit erfolgen.

Vorteilhafterweise wird ein Ist-Drehmoment ermittelt und dem Drehmomentregler zur Regelung des Ist-Drehmoments rückgeführt. Entsprechend kann eine Drehmoment-Ermittlungseinheit vorgesehen sein, welche ausgestaltet ist das Ist-Drehmoment zu ermitteln und mit dem Drehmomentregler verbunden ist, um das Ist-Drehmoment zur Regelung des Ist-Drehmoments rückzuführen.

Damit ergibt sich im automatisierungstechnischen Sinn eine Regelung des Ist-Drehmoments. Würde wie bei einer nach dem Stand der Technik üblichen Regelung dem Drehmomentregler das Ist-Drehmoment zur Regelung des Ist-Drehmoments rückgeführt, und weiters dem Drehmomentregler ein nicht beeinflussbares Soll-Drehmoment vorgegeben, so könnte lediglich auf ein Attribut des zu regelnden Ist-Drehmoments reagiert werden. Es kann jedoch der Fall eintreten, dass hohe Ist-Drehzahlen an der Belastungsmaschine auftreten, welche jedoch nicht zwingend mit einem erhöhten Ist-Drehmoment einhergehen müssen. Insbesondere kann eine erhöhte Ist-Drehzahl auftreten, wenn eine Kupplung zwischen dem Verbrennungsmotor der Belastungsmaschine geöffnet wird. Durch eine Regelung des Ist-Drehmoments nach dem Stand der Technik könnte somit nicht auf eine derartige Drehzahländerung reagiert werden. Da erfindungsgemäß jedoch die Ist-Drehzahl der Belastungsmaschine ermittelt wird, zumindest eine Abweichung des zumindest einen Attributs der Ist-Drehzahl vom zumindest einen Grenzwert ermittelt und basierend auf der zumindest einen Abweichung ein additiver Drehmoment-Korrekturwert ermittelt und dem Soll-drehmoment überlagert wird, kann auf eine veränderte Ist-Drehzahl reagiert werden. Damit kann ein Attribut der Ist-Drehzahl über das Ist-Drehmoment innerhalb der vorgesehenen Grenzwerte gehalten werden.

Vorteilhafterweise wird dem Prüflingsregler von der Prüfstandautomatisierungseinheit ein Sollwert vorgegeben um eine Prüflingsistgröße des Prüflings über Vorgabe der Prüflingsstellgröße einzustellen. So kann die Prüfstandautomatisierungseinheit ausgestaltet sein dem Prüflingsregler einen Sollwert vorzugeben, und der Prüflingsregler ausgestaltet sein, eine Prüflingsistgröße des Prüflings über Vorgabe der Prüflingsstellgröße einzustellen.

Vorteilhafterweise kann eine Prüflingsistgröße des Prüflings ermittelt und dem Prüflingsregler zur Regelung der Prüflingsistgröße rückgeführt werden. Es kann somit eine Istgrößenermittlungseinheit vorgesehen sein, um die Prüflingsistgröße des Prüflings zu ermitteln, wobei die Istgrößenermittlungseinheit mit dem Prüflingsregler verbunden ist, um die Prüflingsistgröße zur Regelung der Prüflingsistgröße rückzuführen. Damit ist der Prüflingsregler als "Regler" im automatisierungstechnischen Sinn für die Prüflingsistgröße ausgelegt.

Vorteilhafterweise ist zumindest ein Grenzwert fest vorgegeben. Durch Vorgabe zumindest eines festen Grenzwerts kann ein festes Limit für ein Attribut der Ist-Drehzahl realisiert sein. Ist ein unterer Grenzwert vorgesehen, so kann eine Unterschreitung dieses unteren Grenzwerts überwacht werden. Ist ein oberer Grenzwert vorgesehen, so kann eine Überschreitung dieses oberen Grenzwerts überwacht werden.

Vorteilhafterweise ist zumindest ein Grenzwert, vorzugsweise abhängig von einer bekannten Systemgröße, veränderbar Als bekannte Systemgröße kann beispielsweise der zeitliche Ablauf des Prüflaufs herangezogen werden. Es kann beispielsweise ein unterer Drehzahlgrenzwert vor dem Aktivieren des Prüflings auf Null gehalten werden. Nach dem Aktivieren des Prüflings kann der untere Drehzahlgrenzwert angehoben werden, um ein Stoppen des Prüflings während des Prüflaufs zu verhindern.

Wird ein Motor als Prüfling an einem Motorprüfstand als Prüfstand kalibriert, so wird beispielsweise ein Soll-Drehmoment an die Belastungsmaschine und eine Fahrpedalstellung (welche wiederum das Motormoment beeinflusst) an den Motor vorgegeben. Im Rahmen der Kalibrierung wird durch die Prüfstandautomatisierungseinheit beispielsweise ein Einspritzzeitpunkt variiert. Da sich durch den Einspritzzeitpunkt neben der Verbrennungsqualität auch das Motordrehmoment des Motors ändert, ist der Arbeitspunkt nicht vollständig stabil, womit sich auch die Motordrehzahl ändern kann. Bei Extremwerten kann der Motor durchgehen oder abgewürgt werden, was durch eine Überwachung der Ist-Drehzahl und eine Limitierung der Ist-Drehzahl über einen Eingriff auf den verhindert werden kann. Somit ist es nicht erforderlich, dass der Motor nach einer Verschiebung des Arbeitspunkts neu thermisch stabilisiert wird, da die Drehzahlgrenzwerte dynamisch mitgeführt werden können um den Motor immer nahe am vorgesehenen Arbeitspunkt zu halten.

Ist beispielsweise ein dynamischer Betrieb eines Antriebsstrangprüfstand mit einem drehzahlgeregelten Prüfling (Motor, Antriebsmaschine, etc.) und einer drehmomentgeregelten Belastungsmaschine vorgesehen, so kann der Fall eintreten, dass am Prüfling unvorhergesehener Weise das Prüflingsmoment kurzzeitig nicht eingehalten wird, beispielsweise da eine Kupplung geöffnet wurde. Es würde nun abhängig vom vorgesehenen Drehzahlgrenzwert durch die Belastungsmaschine auf eine erhöhte Ist-Drehzahl reagiert werden. Ist jedoch vorgesehen, dass in diesem konkreten Fall nicht reagiert wird, so kann die Drehzahlgrenze temporär verschoben werden.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
- Fig. 1: einen Prüfstand mit einem Drehmomentregler für die Belastungsmaschine,
- Fig.2: eine Vergleichseinheit und Korrektureinheit,
- Fig.3: eine spezielle Ausgestaltung einer ersten und zweiten Korrektureinheit.

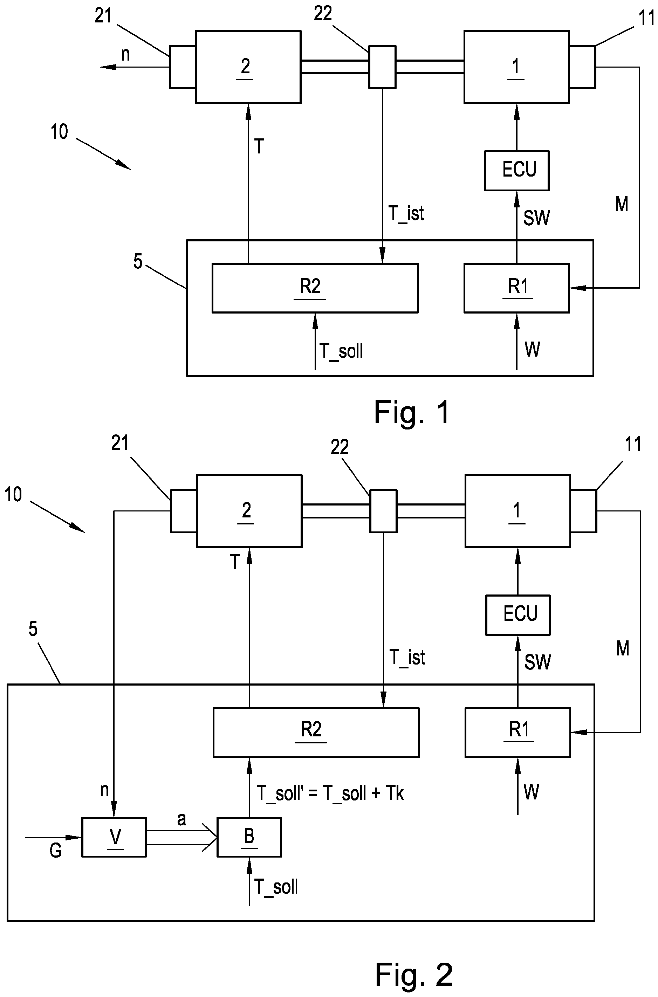

In Fig.1 ist ein typischer Prüfstand 10 für einen Prüfling 1 dargestellt. Als Prüfstände 10 sind beispielsweise Motorprüfstände, (Differential-)Getriebeprüfstände, Powerpacks (Motor und Getriebe), Gesamtantriebsstränge (bis zur Halbwelle), Rollenprüfstände, Antriebsstrangelemente (Kupplung, Wandler, Mittendifferential, Differential, ...) vorstellbar.

Am Prüfstand 10 kann als Prüfling 1 beispielsweise ein Verbrennungsmotor als Teil eines Fahrzeugs physisch aufgebaut werden. Als Prüfling 1 kann aber auch einen Antriebsstrang, eine Antriebsstrangkomponente, ein ganzes Fahrzeug oder eine andere zu prüfende Komponente dienen. Ein Eintrieb und/oder Abtrieb des Prüflings 1 ist mit einer oder mehreren Belastungsmaschinen 2, beispielsweise über eine Prüfstandwelle, verbunden. Die Anbindung zwischen Prüfling 1 und Belastungsmaschine kann auch über Anpassgetriebe erfolgen.

Es ist am Prüfstand 10 ein Prüflingsregler R1 und ein Drehmomentregler R2 vorgesehen. Prüflingsregler R1 und/oder Drehmomentregler R2 können als integraler Teil der Prüfstandautomatisierungseinheit 5, als eigenständige Einheit, als Teil eines Umrichters einer Prüflingssteuerung bzw. Belastungsmaschinensteuerung, etc. ausgeführt sein. Die Funktion des Prüflingsreglers R1 und/oder Drehmomentreglers E2 kann auf einer feldorientierten Regelung basieren, insbesondere wenn eine Synchronmaschine als Prüfling 1 und/oder Belastungsmaschine 2 dient. Eine feldorientierte Regelung kann auf einem Echtzeitsystem ablaufen und Schaltimpulse an Transistoren zur Verfügung stellen. Der Prüflingsregler R1 und/oder der Drehmomentregler R2 können auch auf einem derartigen Echtzeitsystem integriert sein. Auch die erfindungsgemäße Korrektureinheit B, B1, B2 kann auf einem derartigen Echtzeitsystem integriert sein.

Es kann durch einen Drehmomentregler R2 eine einzelne Belastungsmaschine 4 oder eine Kombination von mehreren Belastungsmaschinen 4 geregelt werden. Der Prüfling 1 kann somit beispielsweise über ein Prüfstandssummiergetriebe mit mehreren Belastungsmaschinen 4 verbunden werden.

Eine Prüfstandautomatisierungseinheit 5 ermittelt zur Durchführung des Prüflaufs den entsprechenden zeitlichen Verlauf eines Soll-Drehmoments T_soll für die Belastungsmaschine 2 und stellt das Soll-Drehmoment T_soll dem Drehmomentregler R2 zur Verfügung. Zur Generierung des Verlaufs des Soll-Drehmoments T_soll kann an der Prüfstandautomatisierungseinheit 5 Simulationshardware und/oder Simulationssoftware vorgesehen sein, mit welcher die Prüffahrt eines Fahrzeugs simuliert wird. Dazu kann in der Prüfstandautomatisierungseinheit 5 ein Simulationsmodell, welches beispielsweise ein Fahrermodell, ein Fahrzeugmodell und einem Umgebungsmodell umfasst, implementiert sein. Es können auch weitere Modelle, wie z.B. ein Reifenmodell, ein Straßenmodell, etc., implementiert sein.

Während des Prüflaufs stellt sich an der Belastungsmaschine 2 ein Ist-Drehmoment T_ist ein. In der dargestellten Ausgestaltung wird das Ist-Drehmoment T_ist wird von einer Drehmomentermittlungseinheit 22 ermittelt und an Drehmomentregler R2 rückgeführt. Als Drehmomentermittlungseinheit 22 kann beispielsweise ein Drehmomentsensor an der Prüfstandwelle dienen oder ein Beobachter, welcher das Ist-Drehmoment T_ist aus anderen gemessenen Größen schätzt. Das Ist-Drehmoment T_ist kann natürlich auch aus einer anderen (Mess)Größe abgeleitet werden. Der Drehmomentregler R2 ermittelt hier weiters ein Stelldrehmoment T und übermittelt dies der Belastungsmaschine 2, an welcher sich, wie erwähnt, das Ist-Drehmoment T_ist einstellt.

Der Prüfling 1 wird am Prüfstand 10 ebenso gemäß den Vorgaben eines Prüflaufs betrieben, wobei der Prüflingsregler R1 dem Prüfling 1 eine Prüflingsstellgröße SW vorgibt. Dies kann beispielsweise erfolgen, um Aussagen hinsichtlich bestimmter Messgrößen zu erhalten. Als Messgröße können Schadstoffemissionen, (Kraftstoff-)Verbräuche, akustisches Verhalten des Prüflings 1, usw. angesehen werden. Je nach Messgröße kann am Prüfstand 1 eine entsprechende Messeinheit, wie z.B. eine Emissionsmesseinheit, welche Abgas des Prüflings zugeführt bekommt, vorgesehen sein. Eine Emissionsmesseinheit misst die Emission zumindest eines Schadstoffs, wie beispielsweise CO₂, CO, NOₓ, und/oder die Gesamtmasse an Kohlenwasserstoffen (THC) und/oder eine Partikelanzahl (wie Rußpartikel). Es kann auch eine Verbrauchsmesseinheit, die den Kraftstoffverbrauch des Prüflings misst, als Messeinheit vorgesehen sein.

In der dargestellten Ausgestaltung ist die Prüfstandautomatisierungseinheit 5 ausgestaltet dem Prüflingsregler R1 entsprechend des Prüflaufs eine Prüflingssollgröße W vorzugeben. Weiters ist in der dargestellten Ausgestaltung der Prüflingsregler R1 ausgestaltet über Vorgabe der Prüflingsstellgröße SW eine Prüflingsistgröße M des Prüflings 1 einzustellen, sowie eine Istgrößenermittlungseinheit 11 vorgesehen, um die Prüflingsistgröße M des Prüflings 1 zu ermitteln und dem Prüflingsregler R1 zur Regelung der Prüflingsistgröße M rückzuführen. Damit ist hier der Prüflingsregler R1 ausgestaltet die Prüflingsistgröße M des Prüflings 1 auf die Prüflingssollgröße W zu regeln, indem dem Prüfling 1 eine Prüflingsstellgröße SW vorgegeben wird. Als Prüflingsistgröße M kann ein Ist-Motordrehmoment, eine Ist-Motordrehzahl, etc. dienen, wogegen als Prüflingssollgröße W ein Soll-Motordrehmoment oder eine Soll-Motordrehzahl dienen kann. Als Prüflingsstellgröße SW kann beispielsweise eine Fahrpedalstellung α, ermittelt werden, welche an die Motorsteuereinheit ECU zur Regelung des Prüflings 1 übergeben wird.

Die Größen Ist-Drehmoment T_ist, Soll-Drehmoment T_soll, Stelldrehmoment T, Prüflingsistgröße M, Prüflingssollgröße W, Prüflingsstellgröße SW, Ist-Drehzahl n, etc. können auch als zeitkontinuierliche oder zeitdiskrete Verläufe während des Prüflaufs verstanden werden.

In Fig. 2 ist eine Drehzahlermittlungseinheit 21 zur Erfassung der Ist-Drehzahl n vorgesehen. Die Ist-Drehahl n wird einer Vergleichseinheit V zugeführt, welche zumindest eine Abweichung a zumindest eines Attributs der Ist-Drehzahl n von zumindest einem Grenzwert G bestimmt und an eine Korrektureinheit B weiterleitet. Die Korrektureinheit B ist dazu ausgestaltet basierend auf der zumindest einen Abweichung a einen additiven Drehmoment-Korrekturwert Tk zu ermitteln und dem Soll-Drehmoment T_soll zu überlagern, womit sich ein modifiziertes Solldrehmoment T_soll' ergibt. Der Drehmomentregler R2 regelt nun das Ist-Drehmoment T_ist auf das modifizierte Soll-Drehmoment T_soll', womit sich eine modifizierte Ist-Drehzahl n' ergibt. Das modifizierte Solldrehmoment T_soll' wirkt sich also über ein modifiziertes Ist-Drehmoment T_ist' auf die Ist-Drehzahl n aus, womit sich eine modifizierte Ist-Drehzahl n' einstellt. Damit kann sichergestellt werden kann, dass das Attribut der (nun modifizierten) Ist-Drehzahl n den vorgegebenen Grenzwert G nicht überschreitet.

Die Korrektureinheit B ist dabei dem Drehmomentregler R2 vorgeschaltet, womit verhindert wird, dass der Drehmomentregler R2 den Drehmoment-Korrekturwert Tk wieder ausregelt, d.h. das nun ebenso modifizierte Ist-Drehmoment T_ist' wieder auf das nicht modifizierte Ist-Drehmoment T_ist regeln würde. Da vor dem Drehmomentregler R2 das Soll-Drehmoment T_soll durch Addition auf das korrigierte Soll-Drehmoment T_soll' korrigiert wird, "bemerkt" der Drehmomentregler R2 diesen Eingriff in das Soll-Drehmoment T_soll gar nicht.

Der additive Drehmoment-Korrekturwert Tk kann natürlich je nach Abweichung a positive und negative Werte annehmen, womit eine Überlagerung auf das Soll-Drehmoment T_soll zu einem vergrößerten oder verkleinerten modifizierten Soll-Drehmoment T_soll' führen kann.

Wird, wie dargestellt, unter Verwendung des Drehmomentreglers R2 das Ist-Drehmoment T_ist des Prüflings entsprechend eines Soll-Drehmoments T_soll geregelt, so kann nicht nur auf eine Änderung des Ist-Drehmoments T_ist reagiert werden, sondern auch ein Attribut der Ist-Drehzahl n überwacht werden. Über die Überlagerung des Drehmoment-Korrekturwerts Tk, kann in Folge auch dafür gesorgt werden, dass das Attribut der Ist-Drehzahl n seinen Grenzwert G nicht über- bzw. unterschreitet.

Wird als erstes Attribut der Ist-Drehzahl n die Ist-Drehzahl n selbst herangezogen, so kann die Ist-Drehzahl n mit einer oberen Drehzahlgrenze nₒ bzw. unteren Drehzahlgrenze nᵤ als Grenzwert G verglichen werden. Überschreitet (bzw. unterschreitet) die erste Abweichung a1 zwischen der Ist-Drehzahl n und der oberen bzw. unteren Drehzahlgrenze nₒ bzw. nᵤ so wird ein negativer bzw. positiver additiver Drehmoment-Korrekturwert Tk ermittelt, welcher dem Soll-Drehmoment T_soll überlagert wird und zu einem verringerten bzw. erhöhten modifizierten Soll-Drehdrehmoment T_soll. führt.

Die obere Drehzahlgrenze nₒ bzw. untere Drehzahlgrenze nᵤ kann fest vorgegeben oder während des zeitlichen Ablaufs des Prüflaufs angepasst werden. Es ist auch möglich die obere Drehzahlgrenze nₒ bzw. untere Drehzahlgrenze nᵤ abhängig von anderen Systemgrößen, z.B. Systemgrößen des Prüflings 1, anzupassen. Sind eine oberer Drehzahlgrenze nₒ und eine untere Drehzahlgrenze nᵤ als Grenzwerte G für die Ist-Drehzahl n vorgegeben, so kann die Ist-Drehzahl n der Belastungsmaschine 2 beispielsweise derart geregelt werden, dass sie innerhalb eines vorgegebenen Drehzahlbereichs zwischen oberer Drehzahlgrenze nₒ und unterer Drehzahlgrenze nᵤ bleibt.

Wird als zweites Attribut der Ist-Drehzahl n ein Ist-Drehzahlgradient der Drehzahl dn herangezogen, so kann der Ist-Drehzahlgradient dn mit einer oberen bzw. unteren Drehzahlgradientengrenze dnₒ bzw. dnᵤ als Grenzwert G verglichen werden um eine zweite Abweichung a2 zu ermitteln. Überschreitet (bzw. unterschreitet) die zweite Abweichung a2 die obere bzw. untere Drehzahlgradientengrenze dnₒ, so wird ein negativer bzw. positiver additiver Drehmoment-Korrekturwert Tk ermittelt, welcher dem Soll-Drehmoment T_Soll überlagert wird und zu einem verringerten bzw. erhöhten modifizierten Soll-Drehdrehmoment T_soll. führt.

Die Wahl der unteren Drehzahlgradientengrenze dnᵤ, jedoch insbesondere der oberen Drehzahlgradientengrenze dnₒ kann einem Schutz des Prüflings 1 dienen. Wird eine Überschreitung eines bestimmten Ist-Drehzahlgradients dn als schädlich für den Prüfling eingeschätzt, so kann die obere Drehzahlgradientengrenze dnₒ derart gewählt werden, dass ein Erreichen dieses bestimmten Ist-Drehzahlgradients dn verhindert wird.

Werden eine obere Drehzahlgradientengrenze dnₒ und eine untere Drehzahlgradientengrenze dnᵤ als Grenzwerte G für den Ist-Drehzahlgradienten dn vorgegeben, so kann die Ist-Drehzahl n der Belastungsmaschine 2 beispielsweise derart geregelt werden, dass der Drehzahl-Gradient dn innerhalb eines vorgegebenen Drehzahl-Gradientenbereichs zwischen oberer Drehzahlgradientengrenze dnₒ und unterer Drehzahlgradientengrenze dnᵤ bleibt.

Grundlegend kann auch vorgesehen sein, dass der zumindest eine additive Drehmoment-Korrekturwert Tk dem Soll-Drehmoment T_soll nur dann überlagert wird, wenn die zumindest eine Abweichung a eine maximale Abweichung überschreitet und/oder eine minimale Abweichung unterschreitet.

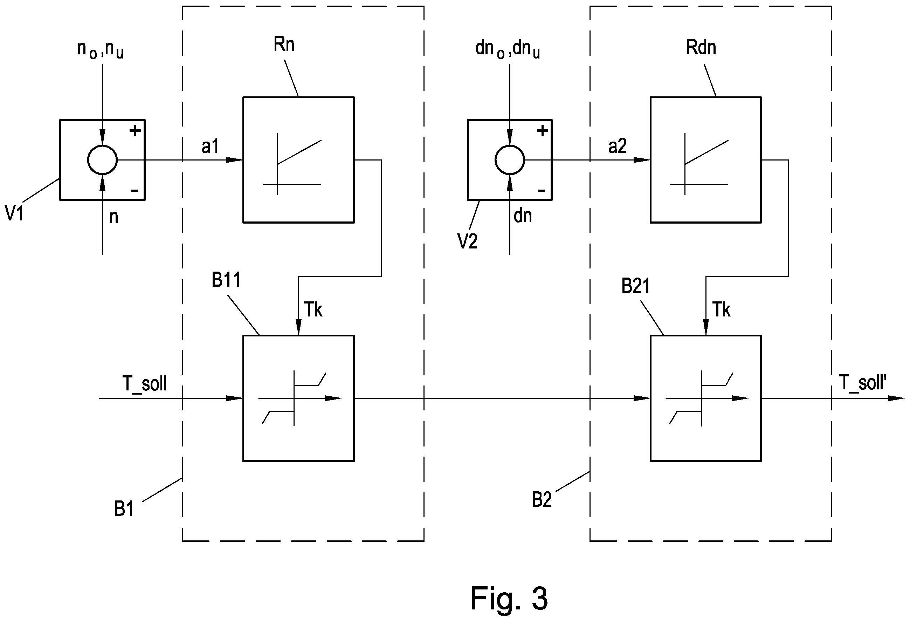

Fig. 3 stellt eine spezielle Ausgestaltung der gegenständlichen Erfindung, wobei eine erste Korrektureinheit B1 einen Drehzahl-Korrekturregler Rn, vorzugsweise einen oberen und einen unteren Pl-Regler (hier nur als ein PI-Regler dargestellt), und eine erste Überlagerungseinheit B11 umfasst. Eine erste Vergleichseinheit V1 ermittelt eine erste Abweichung a1 der Ist-Drehzahl n von einer Drehzahlgrenze dnₒ, dnᵤ als zumindest einen Grenzwert G und übergibt diese erste Abweichung a1 dem Drehzahl-Korrekturregler Rdn. Der Drehzahl-Korrekturregler Rdn ermittelt aus der ersten Abweichung a1 einen Drehmoment-Korrekturwert Tk und übermittelt diesen an die erste Überlagerungseinheit B11, welche den Drehmoment-Korrekturwert Tk dem Solldrehmomnt T überlagert.

Die erste Überlagerungseinheit B11 greift additiv auf das Soll-Drehmoment T_soll ein. Das bedeutet, dass dem Soll-Drehmoment T_soll durch die Überlagerungseinheit B11 der Drehmoment-Korrekturwert Tk überlagert, d.h. je nach Vorzeichen addiert oder subtrahiert, wird, was zu einem modifizierten Soll-Drehmoment T_soll' führt.

Der Stellbereich, d.h. Arbeitsbereich, des oberen und/oder unteren Pl-Reglers ist vorzugsweise abhängig von der ersten Abweichung a1 und dem Soll-Drehmoment T_soll, womit ein geeigneter Drehmoment-Korrekturwert Tk ermittelt wird. Der Stellbereich des oberen PI-Reglers kann derart gewählt sein, dass er nur bei Überschreiten eines oberen Grenzwerts G (obere Drehzahlgrenze dnₒ) eingreift, der Stellbereich des unteren Pl-Reglers kann derart ausgestaltet sein, dass er nur bei Unterschreiten eines unteren Grenzwerts G (untere Drehzahlgrenze dnᵤ) eingreift. Als untere Drehzahlgrenze dnᵤ ist vorzugsweise Null vorgesehen. Vorzugsweise sind die Reglerparameter des oberen und unteren Pl-Reglers durch einen gemeinsamen Parametersatz definierbar.

Weiters ist eine zweite Korrektureinheit B2 vorgesehen, welche einen Drehzahlgradienten-Korrekturregler Rdn, vorzugsweise einen Pl-Regler, und eine zweite Überlagerungseinheit B12 umfasst. Es wird aus der Ist-Drehzahl n ein Ist-Drehzahlgradient dn ermittelt, was durch die zweite Vergleichseinheit V2 oder eine vorgeschaltete Ermittlungseinheit erfolgen kann. In Fig. 2 wird der Ist-Drehzahlgradient dn der zweiten Vergleichseinheit V2 vorgegeben, und wird somit durch eine (nicht dargestellte) Ermittlungseinheit aus der Ist-Drehzahl n ermittelt. Die zweite Vergleichseinheit V2 ermittelt die zweite Abweichung a2 zwischen dem Ist-Drehzahlgradient dn und einer oberen und/oder unteren Drehzahlgradientengrenze dnₒ, dnᵤ, welche als Grenzwert G vorliegt. Diese zweite Abweichung a2 wird dem Drehzahlgradienten-Korrekturregler Rdn zugeführt, welcher diesen verarbeitet und darauf basierend einer zweiten Überlagerungseinheit B21 einen Drehmoment-Korrekturwert Tk übermittelt. Die zweite Überlagerungseinheit B21 überlagert dem Soll-Drehmoment T_soll den Drehmoment-Korrekturwert Tk, was zu einem modifizierten Soll-Drehmoment T_soll' führt. Die Ausführung des Drehzahlgradienten-Korrekturregler Rdn kann wie oben bezüglich des Drehzahl-Korrekturreglers Rn beschrieben, erfolgen. Es kann somit ebenso ein oberer und unterer PI-Regler vorgesehen sein, deren Stellbereiche ebenso derart gewählt sein können, dass der jeweilige PI-Regler nur eingreift, wenn der Drehzahlgradient dn eine obere Drehzahlgradientengrenze dnₒ überschreitet und/oder eine untere Drehzahlgradientengrenze dnᵤ unterschreitet. Der Ist-Drehzahlgradient dn kann vorzeichenbehaftet vorgesehen sein, wobei die untere Drehzahlgradientengrenze dnᵤ ein negatives Vorzeichen aufweist.

Es kann somit eine erste Überlagerungseinheit B11 das Solldrehmoment T_soll mittels Überlagerung eines Drehmoment-Korrekturwerts Tk auf das modifizierte Sollmoment T_soll' modifizieren und die zweite Überlagerungseinheit B21 das bereits modifizierte Sollmoment T_soll' mittels Überlagerung eines (weiteren) Drehmoment-Korrekturwerts Tk weiter modifizieren bzw. - wenn die zweite Überlagerungseinheit B21 vor der ersten Überlagerungseinheit B11 angeordnet ist - umgekehrt.

Die Vergleichseinheiten V1, V2 und/oder Drehzahl-Korrekturregler Rn und/oder Drehzahlgradienten-Korrekturregler Rdn, etc. können als integraler Teil der Prüfstandautomatisierungseinheit 5, als eigenständige Einheit, als Funktion des Prüflingsreglers R1 und/oder Drehmomentreglers R2, etc. ausgeführt sein.

Tritt der Fall ein, dass die erste Überlagerungseinheit B11 das Solldrehmoment T_soll nicht modifiziert (z.B. weil der Drehzahl-Korrekturregler Rn dies aufgrund der zu geringen ersten Abweichung a1 nicht veranlasst), so kann dennoch die zweite Überlagerungseinheit einen additiven Drehmoment-Korrekturwert Tk ermitteln und dem Soll-drehmoment T_soll überlagern. Analog kann der Fall eintreten, dass die zweite Überlagerungseinheit B11 das Stelldrehmoment T nicht modifiziert (z.B. weil der Drehzahlgradienten-Korrekturregler Rn aufgrund der zweiten Abweichung a2 dies nicht veranlasst), so kann dennoch die erste Überlagerungseinheit B11 einen additiven Drehmoment-Korrekturwert Tk ermitteln und dem Soll-drehmoment T_soll überlagern.

Obgleich in der dargestellten Ausgestaltung ein Drehzahl-Korrekturreglers Rn und ein Drehzahlgradienten-Korrekturregler Rdn vorgesehen sind, ist natürlich auch eine Modifikation des Sollmoments T_toll unter Verwendung nur eines Drehzahl-Korrekturreglers Rn oder nur eines Drehzahlgradienten-Korrekturregler Rdn vorstellbar.

Der Drehzahl-Korrekturregler Rn kann aktivierbar und deaktivierbar ausgestaltet sein. So kann der Drehzahl-Korrekturregler Rn beispielsweise abhängig von einer Überschreitung einer ersten Drehzahlgrenze durch die Ist-Drehzahl n aktiviert werden und bei Unterschreitung einer zweiten Drehzahlgrenze deaktiviert werden. Die erste und zweite Drehzahlgrenze kann natürlich übereinstimmen. Stimmen sie nicht überein, so wird eine Hysterese ausgebildet.

Der Drehzahlgradienten-Korrekturregler Rdn kann aktivierbar und deaktivierbar ausgestaltet sein. So kann der Drehzahlgradienten-Korrekturregler Rn beispielsweise abhängig von einer Überschreitung einer ersten Drehzahlgradientengrenze durch den Ist-Drehzahlgradienten dn aktivert werden und bei Unterschreitung einer zweiten Drehzahlgradientengrenze deaktiviert werden. Die erste und zweite Drehzahlgradientengrenze können natürlich übereinstimmen. Stimmen sie nicht überein, so wird eine Hysterese ausgebildet.

## Patentansprüche

1. Verfahren zur Durchführung eines Prüflaufs auf einem Prüfstand (10), wobei am Prüfstand (10) ein Prüfling (1) mit einer Belastungsmaschine (2) verbunden wird, wobei von einer Prüfstandautomatisierungseinheit (5) einem Drehmomentregler (R2) entsprechend des Prüflaufs ein Soll-Drehmoment (T-Soll) vorgegeben wird, womit durch den Drehmomentregler (R2) ein Ist-Drehmoment (T_ist) der Belastungsmaschine (2) eingestellt wird, und wobei dem Prüfling (1) von einem Prüflingsregler (R1) eine Prüflingsstellgröße (SW) vorgegeben wird, **dadurch gekennzeichnet, dass** eine Ist-Drehzahl (n) der Belastungsmaschine (2) ermittelt und zumindest eine Abweichung (a, a1, a2) zumindest eines Attributs der Ist-Drehzahl (n) von zumindest einem Grenzwert (G) ermittelt wird, **dass** basierend auf der zumindest einen Abweichung (a, a1, a2) zumindest ein additiver Drehmoment-Korrekturwert (Tk) ermittelt und dem Soll-Drehmoment (T_soll) überlagert wird.

2. Verfahren nach Anspruch 1, **dadurch gekennzeichnet, dass** als ein erstes Attribut der Ist-Drehzahl (n) der Wert der Ist-Drehzahl (n) herangezogen wird, **und dass** als Grenzwert (G) eine obere und/oder untere Drehzahlgrenze (nₒ, nᵤ) vorgesehen ist.

3. Verfahren nach Anspruch 1 oder 2, **dadurch gekennzeichnet, dass** als ein zweites Attribut der Ist-Drehzahl (n) ein Ist-Drehzahlgradient (dn) herangezogen wird, **und dass** als Grenzwert (G) eine obere und/oder untere Drehzahlgradientengrenze (dnₒ, dnᵤ) vorgesehen ist

4. Verfahren nach einem der Ansprüche 1 bis 3, **dadurch gekennzeichnet, dass** ein Ist-Drehmoment (T_ist) ermittelt und dem Drehmomentregler (R2) zur Regelung des Ist-Drehmoments (T_ist) rückgeführt wird.

5. Verfahren nach einem der Ansprüche 1 bis 4, **dadurch gekennzeichnet, dass** dem Prüflingsregler (R1) von der Prüfstandautomatisierungseinheit (5) ein Sollwert (W) vorgegeben wird um eine Prüflingsistgröße (M) des Prüflings (1) über Vorgabe der Prüflingsstellgröße (SW) einzustellen.

6. Verfahren nach Anspruch 5, **dadurch gekennzeichnet, dass** die Prüflingsistgröße (M) des Prüflings (1) ermittelt und dem Prüflingsregler (R1) zur Regelung der Prüflingsistgröße (M) rückgeführt wird.

7. Verfahren nach einem der Ansprüche 1 bis 6, **dadurch gekennzeichnet, dass** zumindest ein Grenzwert (G) fest vorgegeben ist und/oder **dass** zumindest ein Grenzwert (G), vorzugsweise abhängig von einer bekannten Systemgröße, veränderbar ist.

8. Prüfstand (10) zur Durchführung eines Prüflaufs, wobei am Prüfstand (10) zur Durchführung des Prüflaufs ein Prüfling (1) mit einer Belastungsmaschine (2) verbunden ist, wobei eine Prüfstandautomatisierungseinheit (5) ein Prüflingsregler (R1) und ein Drehmomentregler (R2) vorgesehen sind, wobei der Prüflingsregler (R1) dem Prüfling (1) eine Prüflingsstellgröße (SW) vorgibt und die Prüfstandautomatisierungseinheit (5) dem Drehmomentregler (R2) entsprechend des Prüflaufs eine Soll-Drehmoment (T_soll) vorgibt, womit der Drehmomentregler (R2) ein Ist-Drehmoment (T_ist) der Belastungsmaschine (2) einstellt, **dadurch gekennzeichnet, dass** eine Drehzahlermittlungseinheit (21) zur Ermittlung einer Ist-Drehzahl (n) der Belastungsmaschine (2) vorgesehen ist, dass zumindest eine Vergleichseinheit (V, V1, V2) vorgesehen ist, welche ausgestaltet ist zumindest eine Abweichung (a, a1, a2) zumindest eines Attributs der Ist-Drehzahl (n) von zumindest einem Grenzwert (G) zu bestimmen, **und dass** zumindest eine Korrektureinheit (B, B1, B2) vorgesehen ist, welche ausgestaltet ist basierend auf der zumindest einen Abweichung (a, a1, a2) zumindest einen additiven Drehmoment-Korrekturwert (Tk) zu ermitteln und dem Soll-Drehmoment (T_soll) zu überlagern.

9. Prüfstand nach Anspruch 8, **dadurch gekennzeichnet, dass** eine erste Korrektureinheit (B1) einen Drehzahl-Korrekturregler (Rn), vorzugsweise einen Pl-Regler, und eine erste Überlagerungseinheit (B11) umfasst, wobei der Drehzahl-Korrekturregler (Rd) von einer ersten Vergleichseinheit (V1) eine erste Abweichung (a1) der Ist-Drehzahl (n) von einer Drehzahlgrenze (nₒ, nᵤ) erhält und auf Basis der ersten Abweichung (a1) einen Drehmoment-Korrekturwert (Tk) ermittelt und über die erste Überlagerungseinheit (B11) dem Stelldrehmoment (T) überlagert.

10. Prüfstand nach Anspruch 9, **dadurch gekennzeichnet, dass** der Drehzahl-Korrekturregler (Rn) aktivierbar, vorzugsweise bei Überschreitung einer ersten Drehzahlgrenze, und/oder deaktivierbar, vorzugsweise bei Unterschreitung einer zweiten Drehzahlgrenze, ist.

11. Prüfstand nach Anspruch 8 bis 10, **dadurch gekennzeichnet, dass** eine zweite Korrektureinheit (B2) einen Drehzahlgradienten-Korrekturregler (Rdn), vorzugsweise einen PI-Regler, und eine zweite Überlagerungseinheit (B12) umfasst, wobei der Drehzahlgradienten-Korrekturregler (Rdn) von einer zweiten Vergleichseinheit (V2) eine zweite Abweichung (a2) eines Ist-Drehzahlgradienten (dn) von einer Drehzahlgradientengrenze dnᵤ) erhält, aus der zweiten Abweichung (a2) einen Drehmoment-Korrekturwert (Tk) ermittelt und über die zweite Überlagerungseinheit (B21) den Drehmoment-Korrekturwert (Tk) dem Stelldrehmoment (T) überlagert.

12. Prüfstand nach Anspruch 11, **dadurch gekennzeichnet, dass** der Drehzahlgradienten-Korrekturregler (Rdn) aktivierbar, vorzugsweise bei Überschreitung einer ersten Drehzahlgradientengrenze, und/oder deaktivierbar, vorzugsweise bei Unterschreitung einer zweiten Drehzahlgradientengrenze, ist.

13. Prüfstand nach einem der Ansprüche 8 bis 12, **dadurch gekennzeichnet, dass** eine Drehmoment-Ermittlungseinheit (22) vorgesehen ist, welche ausgestaltet ist das Ist-Drehmoment (T_ist) zu ermitteln und mit dem Drehmomentregler (R2) verbunden ist, um das Ist-Drehmoment (T_Ist) zur Regelung des Ist-Drehmoments (T_ist) rückzuführen.

14. Prüfstand nach Anspruch 8 bis 13, **dadurch gekennzeichnet, dass** die Prüfstandautomatisierungseinheit (5) ausgestaltet ist dem Prüflingsregler (R1) einen Sollwert (W) vorzugeben, **und dass** der Prüflingsregler (R1) ausgestaltet ist eine Prüflingsistgröße (M) des Prüflings (1) über Vorgabe der Prüflingsstellgröße (SW) einzustellen.

15. Prüfstand nach Anspruch 14, **dadurch gekennzeichnet, dass** eine Istgrößenermittlungseinheit (11) vorgesehen ist, um die Prüflingsistgröße (M) des Prüflings (1) zu ermitteln, wobei die Istgrößenermittlungseinheit (11) mit dem Prüflingsregler (R1) verbunden ist, um die Prüflingsistgröße (M) zur Regelung der Prüflingsistgröße (M) rückzuführen.

## Claims

1. A method for carrying out a test run on a test bench (10), wherein a test object (1) is connected to a load machine (2) on the test bench (10), wherein a target torque (T_soll) is specified for a torque controller (R2) by a test bench automation unit (5) according to the test run, whereby an actual torque (T_ist) of the load machine (2) is adjusted by the torque controller (R2), and wherein a test object control variable (SW) is specified for the test object (1) by a test object controller (R1), **characterized in that** an actual rotational speed (n) of the load machine (2) is determined and at least one deviation (a, a1, a2) of at least one attribute of the actual rotational speed (n) from at least one threshold value (G) is determined, **and in that,** based on the at least one deviation (a, a1, a2), at least one additive torque correction value (Tk) is determined and superimposed on the target torque (T_soll).

2. The method according to claim 1, **characterized in that** the value of the actual rotational speed (n) is used as a first attribute of the actual rotational speed (n), **and in that** an upper and/or lower rotational speed threshold (nₒ, nᵤ) is provided as a threshold value (G).

3. The method according to claim 1 or 2, **characterized in that** an actual rotational speed gradient (dn) is used as a second attribute of the actual rotational speed (n), **and in that** an upper and/or lower rotational speed gradient threshold (dnₒ, dnᵤ) is provided as a threshold value (G).

4. The method according to any of claims 1 to 3, **characterized in that** an actual torque (T_ist) is determined and fed back to the torque controller (R2) for controlling the actual torque (T_ist).

5. The method according to any of claims 1 to 4, **characterized in that** a target value (W) is specified for the test object controller (R1) by the test bench automation unit (5) in order to set an actual test object variable (M) of the test object (1) by specifying the test object control variable (SW).

6. The method according to claim 5, **characterized in that** the actual test object variable (M) of the test object (1) is determined and fed back to the test object controller (R1) for controlling the actual test object variable (M).

7. The method according to any of claims 1 to 6, **characterized in that** at least one threshold value (G) is fixed and/or **in that** at least one threshold value (G), preferably depending on a known system variable, can be changed.

8. A test bench(10) for carrying out a test run, wherein a test object (1) is connected to a load machine (2) on the test bench (10) to carry out the test run, wherein a test bench automation unit (5), a test object controller (R1) and a torque controller (R2) are provided, wherein the test object controller (R1) specifies a test object control variable (SW) for the test object (1) and the test bench automation unit (5) specifies a target torque (T_soll) for the torque controller (R2) according to the test run, whereby the torque controller (R2) adjusts an actual torque (T_ist) of the load machine (2), **characterized in that** a rotational speed determination unit (21) is provided for determining an actual rotational speed (n) of the load machine (2), **in that** at least one comparison unit (V, V1, V2) is provided, which is configured to determine at least one deviation (a, a1, a2) of at least one attribute of the actual rotational speed (n) from at least one threshold value (G), **and in that** at least one correction unit (B, B1, B2) is provided, which is configured to determine, based on the at least one deviation (a, a1, a2), at least one additive torque correction value (Tk) and superimpose it on the target torque (T_soll).

9. The test bench according to claim 8, **characterized in that** a first correction unit (B1) comprises a rotational speed correction controller (Rn), preferably a PI controller, and a first superposition unit (B11), wherein the rotational speed correction controller (Rd) receives a first deviation (a1) of the actual rotational speed (n) from a rotational speed threshold (nₒ, nᵤ) from a first comparison unit (V1) and, based on the first deviation (a1), determines a torque correction value (Tk) and superimposes it on the control torque (T) via the first superposition unit (B11).

10. The test bench according to claim 9, **characterized in that** the rotational speed correction controller (Rn) can be activated, preferably when a first rotational speed threshold is exceeded, and/or deactivated, preferably when the speed falls below a second rotational speed threshold.

11. The test bench according to claims 8 to 10, **characterized in that** a second correction unit (B2) comprises a rotational speed gradient correction controller (Rdn), preferably a PI controller, and a second superposition unit (B12), wherein the rotational speed gradient correction controller (Rdn) receives a second deviation (a2) of an actual rotational speed gradient (dn) from a rotational speed gradient threshold dnᵤ) from a second comparison unit (V2), determines a torque correction value (Tk) from the second deviation (a2) and superimposes the torque correction value (Tk) on the control torque (T) via the second superposition unit (B21).

12. The test bench according to claim 11, **characterized in that** the rotational speed gradient correction controller (Rdn) can be activated, preferably when a first rotational speed gradient threshold is exceeded, and/or deactivated, preferably when the speed falls below a second rotational speed gradient threshold.

13. The test bench according to any of claims 8 to 12, **characterized in that** a torque determination unit (22) is provided, which is configured to determine the actual torque (T_ist) and connected to the torque controller (R2) in order to feed the actual torque (T_ist) back to control the actual torque (T_ist).

14. The test bench according to claims 8 to 13, **characterized in that** the test bench automation unit (5) is designed to specify a target value (W) for the test object controller (R1), **and in that** the test object controller (R1) is configured to specify an actual test object variable (M) of the test object (1) by specifying the test object control variable (SW).

15. The test bench according to claim 14, **characterized in that** an actual variable determination unit (11) is provided in order to determine the actual test object variable (M) of the test object (1), wherein the actual variable determination unit (11) is connected to the test object controller (R1) to feed the actual test object variable (M) back in order to control the actual test object variable (M).

## Revendications

1. Procédé destiné à la réalisation d'un cycle d'essai sur un banc d'essai (10), dans lequel, sur le banc d'essai (10), un échantillon (1) est relié à une machine de charge (2), dans lequel une unité d'automatisation de banc d'essai (5) prédéfinit un couple de consigne (T-Soll) à un régulateur de couple (R2) en fonction du cycle d'essai, ce qui permet de régler un couple réel (T_ist) de la machine de charge (2) par le régulateur de couple (R2), et dans lequel une grandeur de réglage d'échantillon (SW) de l'échantillon (1) est prédéfinie par un régulateur d'échantillon (R1), **caractérisé en ce qu'**une vitesse de rotation réelle (n) de la machine de charge (2) est déterminée et au moins un écart (a, a1, a2) d'au moins un attribut de la vitesse de rotation réelle (n) est déterminé par rapport à au moins une valeur limite (G), **en ce que**, sur la base de l'au moins un écart (a, a1, a2), au moins une valeur de correction de couple additive (Tk) est déterminée et superposée au couple de consigne (T_soll).

2. Procédé selon la revendication 1, **caractérisé en ce que** la valeur de la vitesse de rotation réelle (n) est utilisée comme premier attribut de la vitesse de rotation réelle (n), **et en ce qu'**une limite de vitesse de rotation supérieure et/ou inférieure (nₒ, nᵤ) est prévue comme valeur limite (G).

3. Procédé selon la revendication 1 ou 2, **caractérisé en ce qu'**un gradient de vitesse de rotation réel (dn) est utilisé comme second attribut de la vitesse de rotation réelle (n), **et en ce qu**'une limite de gradient de vitesse de rotation supérieure et/ou inférieure (dnₒ, dnᵤ) est prévue comme valeur limite (G).

4. Procédé selon l'une des revendications 1 à 3, **caractérisé en ce qu'**un couple réel (T_ist) est déterminé et renvoyé au régulateur de couple (R2) pour la régulation du couple réel (T_ist).

5. Procédé selon l'une des revendications 1 à 4, **caractérisé en ce qu'**une valeur de consigne (W) est prédéfinie au régulateur d'échantillon (R1) par l'unité d'automatisation de banc d'essai (5) pour régler une grandeur réelle d'échantillon (M) de l'échantillon (1) par prédéfinition de la grandeur de réglage d'échantillon (SW).

6. Procédé selon la revendication 5, **caractérisé en ce que** la grandeur réelle d'échantillon (M) de l'échantillon (1) est déterminée et renvoyée au régulateur d'échantillon (R1) pour la régulation de la grandeur réelle d'échantillon (M).

7. Procédé selon l'une des revendications 1 à 6, **caractérisé en ce qu'**au moins une valeur limite (G) est prédéfinie de manière fixe **et/ou en ce qu'**au moins une valeur limite (G) est modifiable, de préférence en fonction d'une grandeur de système connue.

8. Banc d'essai (10) pour la réalisation d'un cycle d'essai, dans lequel un échantillon (1) est relié à une machine de charge (2) sur le banc d'essai (10) pour la réalisation du cycle d'essai, dans lequel une unité d'automatisation de banc d'essai (5), un régulateur d'échantillon (R1) et un régulateur de couple (R2) sont prévus, dans lequel le régulateur d'échantillon (R1) prédéfinit à l'échantillon (1) une grandeur de réglage d'échantillon (SW) et l'unité d'automatisation du banc d'essai (5) prédéfinit au régulateur de couple (R2) un couple de consigne (T_soll) correspondant au cycle d'essai, ce qui permet au régulateur de couple (R2) de régler un couple réel (T_ist) de la machine de charge (2),
**caractérisé en ce qu'**une unité de détermination de vitesse de rotation (21) est prévue pour la détermination d'une vitesse de rotation réelle (n) de la machine de charge (2), **en ce qu'**au moins une unité de comparaison (V, V1, V2) est prévue, qui est conçue pour déterminer au moins un écart (a, a1, a2) d'au moins un attribut de la vitesse de rotation réelle (n) par rapport à au moins une valeur limite (G), **et en ce qu'**au moins une unité de correction (B, B1, B2) est prévue, qui est conçue pour déterminer, sur la base de l'au moins un écart (a, a1, a2), au moins une valeur de correction de couple additive (Tk) et pour la superposer au couple de consigne (T_soll).

9. Banc d'essai selon la revendication 8, **caractérisé en ce qu'**une première unité de correction (B1) comprend un régulateur de correction de vitesse de rotation (Rn), de préférence un régulateur PI, et une première unité de superposition (B11), dans lequel le régulateur de correction de vitesse de rotation (Rd) reçoit d'une première unité de comparaison (V1) un premier écart (a1) de la vitesse de rotation réelle (n) par rapport à une limite de vitesse de rotation (nₒ, nᵤ) et détermine une valeur de correction de couple (Tk) sur la base du premier écart (a1) et la superpose au couple de réglage (T) par l'intermédiaire de la première unité de superposition (B11).

10. Banc d'essai selon la revendication 9, **caractérisé en ce que** le régulateur de correction de vitesse de rotation (Rn) peut être activé, de préférence lorsqu'une première limite de vitesse de rotation est dépassée, et/ou désactivé, de préférence lorsqu'une seconde limite de vitesse de rotation est dépassée vers le bas.

11. Banc d'essai selon les revendications 8 à 10, **caractérisé en ce qu'**une seconde unité de correction (B2) comprend un régulateur de correction de gradient de vitesse de rotation (Rdn), de préférence un régulateur PI, et une seconde unité de superposition (B12), dans lequel le régulateur de correction de gradient de vitesse de rotation (Rdn) reçoit d'une seconde unité de comparaison (V2) un second écart (a2) d'un gradient de vitesse de rotation réel (dn) par rapport à une limite de gradient de vitesse dₙᵤ), détermine une valeur de correction de couple (Tk) à partir du second écart (a2) et superpose la valeur de correction de couple (Tk) au couple de réglage (T) par l'intermédiaire de la seconde unité de superposition (B21).

12. Banc d'essai selon la revendication 11, **caractérisé en ce que** le régulateur de correction de gradient de vitesse de rotation (Rdn) peut être activé, de préférence lorsqu'une première limite de gradient de vitesse de rotation est dépassée, et/ou désactivé, de préférence lorsqu'une seconde limite de gradient de vitesse de rotation est dépassée vers le bas.

13. Banc d'essai selon l'une des revendications 8 à 12,
**caractérisé en ce qu'**une unité de détermination de couple (22) est prévue, qui est conçue pour déterminer le couple réel (T_ist) et qui est reliée au régulateur de couple (R2) afin de renvoyer le couple réel (T_ist) pour la régulation du couple réel (T_ist).

14. Banc d'essai selon les revendications 8 à 13, **caractérisé en ce que** l'unité d'automatisation de banc d'essai (5) est conçue pour prédéfinir une valeur de consigne (W) au régulateur d'échantillon (R1), **et en ce que** le régulateur d'échantillon (R1) est conçu pour régler une grandeur réelle d'échantillon (M) de l'échantillon (1) en prédéfinissant la grandeur de réglage d'échantillon (SW).

15. Banc d'essai selon la revendication 14, **caractérisé en ce qu'**une unité de détermination de grandeur réelle (11) est prévue pour déterminer la grandeur réelle d'échantillon (M) de l'échantillon (1), dans lequel l'unité de détermination de grandeur réelle (11) est reliée au régulateur d'échantillon (R1) pour renvoyer la grandeur réelle d'échantillon (M) pour la régulation de la grandeur réelle d'échantillon (M).
